# FASCICULE DE BREVET EUROPEEN

(11) **EP 2 333 939 B1**
(45) Date de publication et mention de la délivrance du brevet: **08.04.2015**
(21) Numéro de dépôt: 10193706.8
(22) Date de dépôt: 03.12.2010
(51) Int. Cl.: H02K 3/47, H02K 21/14

(54) **Alternateur et système électrique correspondant**
Wechselstromgenerator und entsprechendes elektrisches System
Alternator and corresponding electric system

(30) Priorité: 08.12.2009 FR 0958732
(43) Date de publication de la demande: 15.06.2011
(73) Titulaire: Commissariat à l'Énergie Atomique et aux Énergies Alternatives, 75015 Paris (FR)
(72) Inventeur: Beranger, Marc, 38410, SAINT MARTIN D'URIAGE (FR)
(74) Mandataire: Thibon, Laurent

(56) Documents cités:
- EP-A1- 1 646 131
- EP-A2- 2 045 897
- US-A1- 2001 043 806

## Description

### Domaine de l'invention

La présente invention concerne un alternateur de faible puissance, à savoir de puissance comprise entre 0,1 et 100 watts, typiquement de 1 à 3 watts. De tels alternateurs sont utilisés notamment pour l'éclairage de bicyclettes ou dans des lampes de poche rechargées grâce à une manivelle.

### Exposé de l'art antérieur

On considère ici des alternateurs, c'est-à-dire des générateurs électriques fournissant une tension alternative. On considère plus particulièrement des alternateurs comprenant un rotor constitué d'un aimant permanent et un stator constitué d'un bobinage. De façon classique, quand on veut réaliser un tel alternateur, on prévoit, pour optimiser la concentration et l'utilisation du champ magnétique généré par le rotor, d'associer les enroulements statoriques à des noyaux magnétiques en fer doux.

La prévision de noyaux magnétiques au niveau du stator entraîne que ces alternateurs ont un couple résistant important à vide et un poids non négligeable. Ainsi, les alternateurs utilisés pour des bicyclettes, improprement appelés "dynamos", ont généralement de très mauvais rendements. Par exemple, une "dynamo" classique, prévue pour tourner à environ 3750 tours/minute pour une vitesse du cycliste de l'ordre de 15 km/h et susceptible de fournir une puissance électrique utile de l'ordre de 3 watts a des pertes de l'ordre de 6 watts. Quand l'alternateur n'est pas connecté, ces pertes sont de l'ordre de 7 watts. La puissance mécanique à fournir est donc comprise entre 7 et 9 watts. Les pertes sont loin d'être négligeables par rapport à l'effort total déployé par un cycliste pédalant normalement. En effet, on peut considérer qu'avec une bicyclette de bonne qualité, un cycliste pédalant normalement pour avancer à 15 km/h en plat doit fournir un effort de l'ordre de 70 watts. L'utilisation de l'alternateur, en charge ou à vide, entraîne que le cycliste doit fournir un effort de 10 % supérieur à son effort normal. Ceci entraine que le cycliste est amené à mettre son alternateur en position de non fonctionnement lorsqu'il n'en a pas besoin, ce qui nécessite de prévoir des pièces mécaniques destinées à la mise en action ou non de l'alternateur, qui comporte par exemple un galet roulant sur une roue de la bicyclette. Pour éviter cet effort supplémentaire, le cycliste peut tarder à mettre en service l'éclairage de sa bicyclette alors que la nuit tombe et compromettre ainsi sa sécurité.

Un tel alternateur selon l'état de la technique est connu, par exemple, du document EP-A-2045897.

### Résumé

Un objet d'un mode de réalisation de la présente invention est de prévoir un alternateur palliant au moins certains des inconvénients des alternateurs classiques.

Un objet plus particulier d'un mode de réalisation de la présente invention est de prévoir un alternateur à fort rendement.

Un autre objet d'un mode de réalisation de la présente invention est de prévoir un alternateur ayant des pertes à vide négligeables.

Un autre objet d'un mode de réalisation de la présente invention est de prévoir un alternateur de faible poids, de faible encombrement et constitué d'un petit nombre de pièces simples.

Ainsi, un mode de réalisation de la présente invention prévoit un alternateur comprenant un aimant permanent monté en rotation, la direction d'aimantation de l'aimant étant orthogonale à l'axe de rotation, et un bobinage sans noyau de fer entourant l'aimant et dont les spires se trouvent dans un plan sensiblement parallèle à un plan contenant l'axe de rotation, le bobinage s'étendant sur un angle dièdre à partir de l'axe de rotation inférieur à 75 degrés et, radialement, sur une distance comprise entre le quart et la moitié du diamètre de l'aimant.

Selon un mode de réalisation de la présente invention, l'alternateur comprend plusieurs ensembles de bobines angulairement décalés les uns par rapport aux autres, pour fournir une alimentation polyphasée.

Selon un mode de réalisation de la présente invention, l'alternateur comprend trois ensembles de bobines disposés à 60 degrés les uns des autres, pour fournir une alimentation triphasée.

Selon un mode de réalisation de la présente invention, l'aimant est cylindrique.

Un mode de réalisation de la présente invention prévoit un système électrique de régulation comprenant un alternateur tel que ci-dessus relié à un dispositif d'éclairage.

### Brève description des dessins

Ces objets, caractéristiques et avantages seront exposés en détail dans la description suivante de modes de réalisation particuliers faite à titre non-limitatif en relation avec les figures jointes parmi lesquelles :
la figure 1 est une vue en perspective illustrant une configuration d'alternateur ;
la figure 2 est une vue de dessus illustrant schématiquement une configuration d'alternateur selon un mode de réalisation de la présente invention ;
la figure 3 est une vue de dessus illustrant schématiquement une configuration d'alternateur selon un mode de réalisation de la présente invention ;
la figure 4 est une vue en perspective illustrant une réalisation d'un alternateur selon un mode de réalisation de la présente invention, sans ses bobines ;
la figure 5 est une vue en coupe selon un plan transverse de l'alternateur de la figure 4 ; et
la figure 6 est une vue en coupe dans un plan axial de l'alternateur de la figure 4.

### Description détaillée

Par souci de clarté, de mêmes éléments ont été désignés par de mêmes références aux différentes figures qui ont été tracées sans respect d'échelle.

La présente invention prévoit, pour obtenir un alternateur particulièrement léger, de former un alternateur sans noyau de fer associé aux enroulements statoriques.

A priori, on considère que les alternateurs et de façon générale les génératrices sans noyau de fer ont de très mauvais rendements. En effet, si on prévoit des noyaux de fer, c'est pour bien canaliser le champ produit par le rotor et l'utiliser au maximum dans les enroulements statoriques.

Comme on l'a indiqué précédemment, dans les machines réelles de faible puissance (inférieure à 10 watts), les rendements sont mauvais, rarement supérieurs à 60 % et parfois inférieurs à 50 %. En effet, si on compare deux machines identiques à des échelles différentes, la résistance des enroulements de la plus grosse machine est inférieure tandis que la tension par spire est supérieure. Les pertes cuivre sont donc plus faibles. De plus, la réluctance du circuit magnétique (l'aptitude du circuit magnétique à s'opposer à sa pénétration par un champ magnétique) de la plus grosse machine est plus faible et l'inducteur nécessite donc un plus faible nombre d'ampères-tours pour une induction magnétique donnée (généralement autour de 1 Tesla). Ainsi, même si la vitesse de rotation des plus petites machines est généralement plus élevée, la vitesse circonférentielle, et donc la tension produite, reste inférieure.

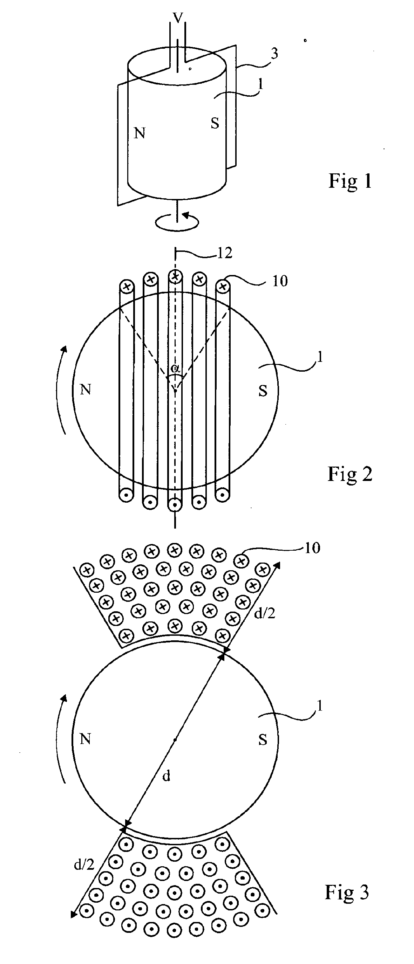

La figure 1 est une vue schématique d'un alternateur sans noyau de fer. Le rotor 1 est constitué d'un aimant cylindrique dont la direction d'aimantation nord/sud est transverse à la direction de l'axe de rotation. Ce rotor tourne à l'intérieur d'un enroulement statorique 3 constitué d'un petit nombre de spires, par exemple une seule spire. Un tel alternateur est en fait un appareil de laboratoire à très mauvais rendement sans applications pratiques dont on considérait que fondamentalement il ne pouvait avoir un rendement élevé. On a tout au plus construit des appareils de démonstration comportant un grand nombre de spires mais sans arriver à un rendement satisfaisant.

On va montrer ici que, à certaines conditions, des alternateurs basés sur ce principe peuvent avoir un rendement élevé tout en présentant l'avantage d'avoir un faible poids. On va également montrer qu'ils ont l'avantage de présenter de très faibles pertes à vide.

La figure 2 est une vue en coupe transverse d'une structure du type de celle de la figure 1 dans laquelle un enroulement 10 comprend un certain nombre de spires disposés côte à côte, électriquement en série. On peut démontrer que l'angle dièdre α défini comme l'angle à partir du centre du rotor en direction des bords extrêmes de l'enroulement 10 doit être optimisé. En effet, si cet angle est trop grand, les spires latérales situées le plus au bord par rapport à un axe 12 divisant en deux l'angle α voient une composante de champ utile très faible et contribuent peu à la fourniture de tension. Par contre, ces spires latérales, qui se trouvent en série avec les autres, ajoutent à la résistance totale de la bobine et augmentent les pertes Joule, produisant une chute de rendement. Des mesures et simulations effectuées par l'inventeur montrent que l'angle α doit être choisi à une valeur voisine de 60 °, par exemple comprise entre 45° et 75°, pour un compromis optimal entre la résistance interne et la tension produite. Par rapport à la spire centrale, une spire positionnée à 45° contribue pour 90% de la tension fournie, et une spire positionnée à 75° contribue seulement pour 90% à la tension fournie. Pour des angles plus importants, la contribution des spires décroît rapidement.

En outre, comme l'illustre la figure 3, il est souhaitable que le bobinage s'étende sur une certaine distance radiale pour, en dépit de l'absence de noyaux de fer concentrateurs de champ, bénéficier au maximum du champ tournant généré par le rotor. Des mesures et simulations effectuées par l'inventeur montrent que le bon compromis entre la valeur de la résistance série de l'enroulement et le recueil d'une tension maximum, c'est-à-dire une utilisation maximum du champ produit, correspond à une étendue radiale du bobinage de l'ordre du quart à la moitié du diamètre d de l'aimant tournant. Le champ mesuré à 1 mm de la surface d'un aimant cylindrique de 18 mm de diamètre vaut 0,54 T en face des pôles. Au quart de son diamètre, il vaut 0,25 T et seulement 0,11 T à la moitié du diamètre.

Dans ce qui précède, on a considéré un aimant dipolaire, c'est-à-dire un aimant possédant un seul pôle nord et un seul pôle sud. En effet, l'inventeur a démontré que la répartition des lignes de champ dans le cas d'un aimant quadripolaire ou autre aimant multipolaire fait que le recueil, sans noyau de fer, des lignes de champ produites est beaucoup moins satisfaisant qu'avec un aimant dipolaire. Ceci est contraire au choix généralement effectué dans les génératrices à noyau de fer, pour lesquelles, de façon générale le choix d'un inducteur (aimant par exemple) multipolaire contribue à une augmentation du rendement.

Par contre, pour bénéficier au maximum du champ rayonné par l'aimant tournant, étant donné que la bobine décrite précédemment présente une étendue angulaire optimale limitée, on utilisera de préférence plusieurs ensembles de bobines similaires décalés angulairement les uns par rapport aux autres pour constituer un alternateur polyphasé. Il s'avère que l'optimum est de placer trois ensembles de bobines, comme cela sera décrit plus en détail ci-après, pour produire un courant triphasé, chaque ensemble de bobines ayant une étendue angulaire de l'ordre de 60 degrés. On soulignera qu'il est tout à fait inusuel d'utiliser des montages triphasés pour des alternateurs de faible puissance, les montages triphasés étant habituellement réservés aux génératrices de puissances supérieures à 1 kW.

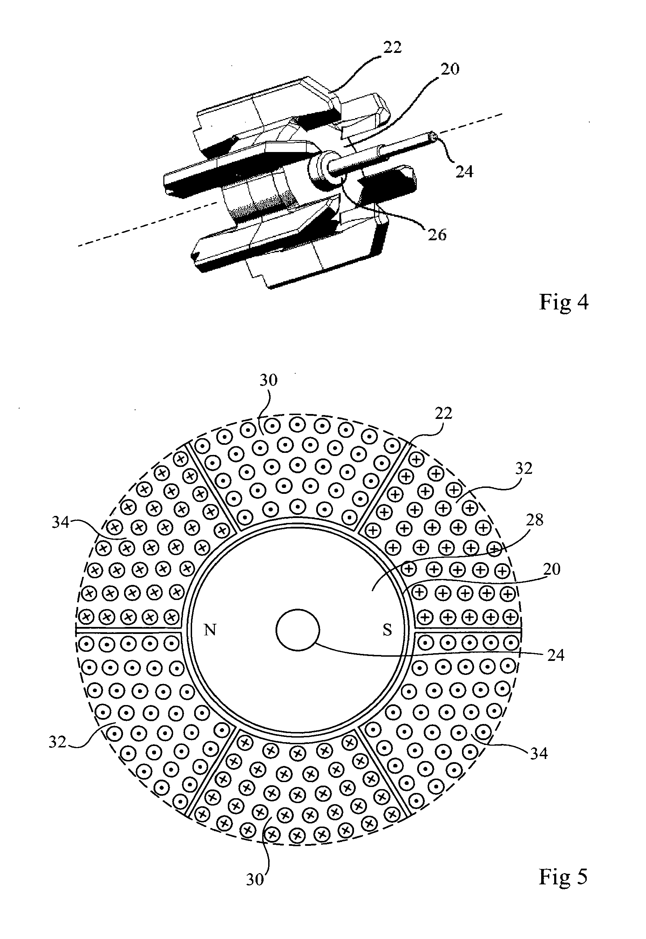

Les figures 4, 5 et 6 illustrent une réalisation possible d'un alternateur selon un mode de réalisation de la présente invention.

La figure 4 est une vue en perspective d'un tel alternateur sans ses bobinages statoriques. En figure 4, on voit un boîtier 20 destiné à recevoir les enroulements statoriques. Des ailettes 22 sont prévues pour diviser l'espace autour de ce boîtier statorique en six régions. Un aimant, non visible en figure 4, est solidaire d'un axe 24 tournant dans le boîtier 20 grâce à la prévision de paliers 26.

La figure 5 est une vue en coupe selon un plan transverse à l'axe 24 dans laquelle on voit l'aimant 28 solidaire de l'axe 24. On a également représenté les ailettes 22 du boîtier 20. Trois enroulements 30, 32, 34 sont bobinés de la façon décrite en relation avec les figures 1 à 3 pour fournir un alternateur triphasé. Chaque enroulement est bobiné entre des couples d'ailettes définissant des régions spatialement opposées.

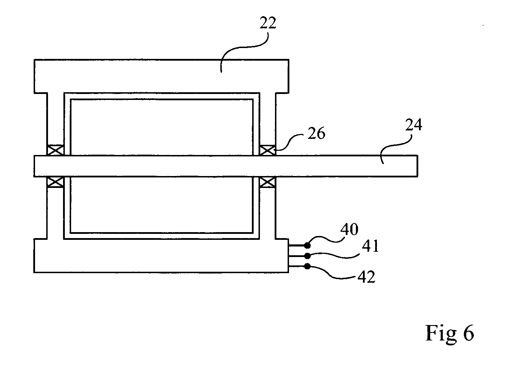

Dans la vue en coupe axiale de la figure 6, de mêmes références qu'en figures 4 et 5 désignent de mêmes éléments. On y voit mieux le palier 26 et on a figuré des connexions 40, 41, 42 aux bornes desquelles est disponible l'énergie électrique triphasée.

Des essais effectués par le demandeur ont montré qu'un tel alternateur ayant un diamètre hors tout de 36 millimètres et un poids de 60 g, tournant à 3750 tours/minute, présente des pertes à vide de l'ordre de 40 milliwatts seulement pour une tension à vide de 10,8 volts efficaces. Cet alternateur peut fournir une puissance de 1 watt avec un rendement de 90 % et une puissance nominale de 3 watts avec un rendement de 75 %. Ces puissances en courant alternatif triphasé ont été obtenues grâce à 3 bobinages comptant 300 spires chacun de fil émaillé de 0,17 mm de diamètre.

La très faible valeur des pertes à vide constitue un avantage important du dispositif de la présente invention. En effet, étant donné la faible valeur de ces pertes, on peut laisser l'alternateur selon la présente invention mécaniquement couplé en permanence et on économise ainsi les moyens mécaniques de déconnexion qui doivent être prévus avec les alternateurs de bicyclette classiques. D'autre part, on peut faire fonctionner l'alternateur pratiquement en permanence à sa puissance de 1 W (négligeable devant l'effort à fournir par le cycliste pour maintenir sa vitesse en plat) avec un rendement de l'ordre de 90 % et utiliser la puissance disponible pour recharger en permanence une batterie qui pourra être utilisée par exemple quand la bicyclette est à l'arrêt ou roule à très faible vitesse. La puissance maximale sera utilisée seulement quand le cycliste souhaite utiliser son éclairage ou autre équipement électrique.

Bien entendu, l'alternateur fonctionne à fréquence et tension variables, ce qui peut être gênant pour l'alimentation d'un éclairage. Si on veut que l'intensité d'éclairage soit relativement constante, on prévoira des moyens électroniques de régulation.

Bien que l'on ait décrit un alternateur dans le cas particulier de l'application à un éclairage de bicyclette, cet alternateur pourra être utilisé dans d'autres applications, par exemple en relation avec des véhicules terrestres sans moteur tel que des patins à roulette, des poussettes, des fauteuils roulants, ou avec des véhicules non terrestres sans moteur tels que des planeurs, des parapentes ou des voiliers, en entraînant l'axe de l'alternateur par une hélice ou une turbine. Il pourra être également utilisé comme éclairage de sécurité pour une remorque à bagage ou dans le cadre de jouets électroniques : la transformation de l'énergie mécanique en énergie électrique par ce type d'alternateur très performant et de faible poids permettrait de supprimer les piles de certains jouets tels que des voitures à friction. On peut également citer l'alimentation de circuits électroniques de modèles réduits thermiques, de drones ou d'outils de jardin à moteur thermique, l'utilisation comme petite éolienne à fort rendement, l'utilisation pour des lampes de poche à actionneur mécanique, l'utilisation comme chargeur de secours pour téléphone portable ou autres appareils nomades.

Par ailleurs, on a décrit l'aimant comme étant un aimant cylindrique. Toute autre forme d'aimant serait également possible, par exemple un aimant sphérique ou un aimant en bâtonnet. On préférera toutefois pour des raisons d'efficacité et de simplicité mécanique utiliser un aimant cylindrique.

Par ailleurs, étant donné l'absence de noyaux de fer, il subsistera un champ magnétique tournant à l'extérieur des bobinages de l'alternateur. Dans certaines applications, on pourra prévoir un blindage externe pour faire écran à ce champ. On pourra également prévoir que ce blindage externe tourne avec l'aimant.

## Revendications

1. Alternateur comprenant :
un aimant permanent (28) monté en rotation, la direction d'aimantation de l'aimant étant orthogonale à l'axe de rotation, et
un bobinage sans noyau de fer (30, 32, 34) entourant l'aimant et dont les spires se trouvent dans un plan sensiblement parallèle à un plan contenant l'axe de rotation, le bobinage s'étendant sur un angle dièdre (α) à partir de l'axe de rotation inférieur à 75 degrés et, radialement, sur une distance comprise entre le quart et la moitié du diamètre de l'aimant.

2. Alternateur selon la revendication 1, comprenant plusieurs ensembles de bobines angulairement décalés les uns par rapport aux autres, pour fournir une alimentation polyphasée.

3. Alternateur selon la revendication 1 ou 2, comprenant trois ensembles de bobines disposés à 60 degrés les uns des autres, pour fournir une alimentation triphasée.

4. Alternateur selon l'une quelconque des revendications 1 à 3, dans lequel l'aimant est cylindrique.

5. Système électrique de régulation comprenant un alternateur selon l'une quelconque des revendications 1 à 4, relié à un dispositif d'éclairage.

6. Système électrique comprenant un alternateur selon l'une quelconque des revendications 1 à 4, relié à une batterie.

## Patentansprüche

1. Generator, der Folgendes ausweist:
einen drehbar angeordneten Permanentmagnet (28), dessen Magnetisierungsrichtung senkrecht zur Drehachse ist, und
eine Wicklung ohne Eisenkern (30, 32, 34), welche den Magnet umgibt, bei der jede Wicklung in einer Ebene im Wesentlichen parallel zu einer Ebene, welche die Drehachse enthält, liegt, wobei sich die Wicklung über einen Raumwinkel (α) von der Rotationsachse erstreckt, der kleiner als 75 Grad ist und sich radial über einen Abstand erstreckt, der zwischen einem Viertel und einer Hälfte des Magnetdurchmessers liegt.

2. Generator nach Anspruch 1, der mehrere Sätze von Spulen aufweist, die winkelmäßig zueinander verschoben sind, um eine Mehrphasenstromversorgung vorzusehen.

3. Generator nach Anspruch 1 oder 2, der drei Sätze von Spulen aufweist, die mit einem 60 Grad Winkel zueinander angeordnet sind, um eine Dreiphasenstromversorgung vorzusehen.

4. Generator nach einem der Ansprüche 1 bis 3, wobei der Magnet zylindrisch ist.

5. Elektrisches Reguliersystem, das den Generator nach einem der Ansprüche 1 bis 4 aufweist, der mit einer Beleuchtungsvorrichtung verbunden ist.

6. Elektrisches Reguliersystem, das den Generator nach einem der Ansprüche 1 bis 4 aufweist, und zwar verbunden mit einer Batterie.

## Claims

1. An alternator comprising:
a rotatably-assembled permanent magnet (28), the magnetization direction of the magnet being orthogonal to the rotation axis, and
a winding with no iron core (30, 32, 34) surrounding the magnet and having each turn in a plane substantially parallel to a plane containing the rotation axis, the winding extending across a dihedral angle (α) from the rotation axis smaller than 75 degrees and, radially, over a distance ranging between one quarter and half of the magnet diameter.

2. The alternator of claim 1, comprising several sets of coils angularly shifted with respect to one another to provide a polyphase power supply.

3. The alternator of claim 1 or 2, comprising three sets of coils arranged at a 60-degree angle away from one another to provide a three-phase power supply.

4. The alternator of any of claims 1 to 3, wherein the magnet is cylindrical.

5. An electric regulation system comprising the alternator of any of claims 1 to 4, connected to a lighting device.

6. An electric regulation system comprising the alternator of any of claims 1 to 4, connected to a battery.
